# EUROPEAN PATENT APPLICATION

(11) **EP 4 704 480 A2**
(43) Date of publication of application: **04.03.2026**
(21) Application number: 25195578.7
(22) Date of filing: 13.08.2025
(51) Int. Cl.: H04W 72/0453, H04W 36/06

(54) **WIRELESS COMMUNICATION METHOD FOR DEVICE GROUP**

(30) Priority: 30.08.2024 CN 202411218421
(71) Applicant: Harman International Industries, Incorporated, Stamford, CT 06901 (US)
(72) Inventor: WAN, Yulin, Shenzhen, 518057 (CN); YE, Wei, Shenzhen, 518057 (CN); TANG, Chuanlong, Shenzhen, 518057 (CN); DOU, Yudong, Shenzhen, 518057 (CN)
(74) Representative: Rummler, Felix

(57) **Abstract**

A wireless communication method, apparatus, and device for a device group, a computer program product, and a computer-readable storage medium are provided. The method, targeting a device group containing a primary device and one or more secondary devices, when a frequency of a network connection of the primary device changes, adjusts operating frequencies of the secondary device and the primary device jointly to a same frequency, where the same frequency is a changed frequency of the network connection of the primary device, or another frequency, such that a frequency of a wireless connection between the primary device and the secondary device is enabled to be changed to a first frequency accordingly, thereby maintaining the wireless connection between the secondary device and the primary device without requiring disconnection and reestablishment of the wireless connection between the secondary device and the primary device in response to channel switching of the primary device. Through this method, a wireless communication channel between the secondary device and the primary device is enabled to be adjusted according to channel variations of the primary device, such that the wireless communication channel between the secondary device and the primary device is enabled to automatically switch following channel variations of the primary device.

## Description

### Technical Field

The present disclosure relates to the field of wireless communications, and more particularly, to a wireless communication method, apparatus, and device for a device group, a computer program product, and a storage medium.

### Background

Under the current background of rapid development of wireless communication technologies, multi-task processing in device groups faces a series of complex technical challenges. With the growing demand of users for more efficient and flexible communication methods, challenges such as scarcity of spectrum resources, channel conflicts, and the pursuit of higher data transmission capabilities exist in current communication environments, necessitating the optimization of existing communication strategies.

The structure of a device group typically includes one primary device and one or more secondary devices, where the primary device undertakes a responsibility for connecting to a network, while the secondary devices interact with the primary device through a plurality of connection methods. Under such a architecture, how to effectively manage and schedule communication tasks of a plurality of devices becomes crucial for enhancing the overall performance. Particularly in scenarios requiring simultaneous processing of multiple tasks, ensuring that each device can operate under optimal conditions becomes particularly important.

Therefore, a wireless communication method for a device group is required to enable performance optimization for multi-task processing in the device group.

### Summary of the Invention

To address the above problems, the present disclosure provides a design in which when a frequency of a network connection of a primary device changes, a connection from a secondary device to the primary device follows this frequency, eliminating the need for disconnection and reconnection between the secondary device and the primary device, thereby achieving optimized performance for the device group.

Embodiments of the present disclosure provide a wireless communication method, apparatus, and device for a device group, a computer program product, and a computer-readable storage medium.

An embodiment of the present disclosure provides a wireless communication method for a device group including a primary device and a secondary device, where the primary device is connectable to the secondary device and other access points in a same frequency channel, the method including: in a case where a frequency of a wireless connection between the primary device and another access point changes, switching operating frequencies of the primary device and the secondary device to a first frequency to change a frequency of a wireless connection between the primary device and the secondary device to the first frequency, wherein the first frequency is a changed frequency of the wireless connection between the primary device and the another access point, or another frequency.

An embodiment of the present disclosure provides a wireless communication method for a device group including a primary device and a secondary device, where the primary device is connectable to the secondary device and other access points in a same frequency channel, the method including: establishing a wireless connection having a second frequency between the primary device and the secondary device; in a case where the primary device is to establish a wireless connection with a first access point, determining that a frequency of the wireless connection between the primary device and the first access point is a third frequency; in a case where the third frequency is not equal to the second frequency, switching the operating frequencies of the primary device and the secondary device to the third frequency to change the frequency of the wireless connection between the primary device and the secondary device to the third frequency; and establishing a wireless connection having the third frequency between the primary device and the first access point.

According to an embodiment of the present disclosure, establishing a wireless connection having a second frequency between the primary device and the secondary device includes: setting a frequency for accessing the primary device to the second frequency; connecting to the primary device by the secondary device through a frequency channel corresponding to the second frequency, wherein the second frequency is the operating frequency of the primary device.

According to an embodiment of the present disclosure, determining that a frequency of the wireless connection between the primary device and the first access point is a third frequency includes: determining an operating frequency of the first access point by the primary device, and setting the third frequency to the operating frequency of the first access point.

According to an embodiment of the present disclosure, in a case where the third frequency is not equal to the second frequency, switching the operating frequencies of the primary device and the secondary device to the third frequency to change the frequency of the wireless connection between the primary device and the secondary device to the third frequency includes: setting a frequency for accessing the primary device to the third frequency; notifying the secondary device that the frequency for accessing the primary device is set to the third frequency; and switching the operating frequencies of the primary device and the secondary device jointly to the third frequency.

An embodiment of the present disclosure provides a wireless communication method for a device group including a primary device and a secondary device, where the primary device is connectable to the secondary device and other access points in a same frequency channel, the method including: establishing a wireless connection having a fourth frequency between the primary device and a second access point; establishing a wireless connection having the fourth frequency between the primary device and the secondary device; and in a case where the frequency of the wireless connection between the primary device and the second access point is to change from the fourth frequency to a fifth frequency, switching operating frequencies of the primary device and the secondary device to the fifth frequency to change the frequency of the wireless connection between the primary device and the secondary device to the fifth frequency, and switching an operating frequency of the second access point to the fifth frequency to change the frequency of the wireless connection between the primary device and the second access point to the fifth frequency.

According to an embodiment of the present disclosure, establishing a wireless connection having a fourth frequency between the primary device and a second access point includes: determining the operating frequency of the second access point by the primary device, and setting the fourth frequency to the operating frequency of the second access point; and connecting to the second access point by the primary device through a frequency channel corresponding to the fourth frequency.

According to an embodiment of the present disclosure, establishing a wireless connection having the fourth frequency between the primary device and the secondary device includes: after determining the operating frequency of the second access point by the primary device, and setting the fourth frequency to the operating frequency of the second access point, setting a frequency for accessing the primary device to the fourth frequency; and connecting to the primary device by the primary device through a frequency channel corresponding to the fourth frequency.

According to an embodiment of the present disclosure, in a case where the frequency of the wireless connection between the primary device and the second access point is to change from the fourth frequency to a fifth frequency, switching operating frequencies of the primary device and the secondary device to the fifth frequency to change the frequency of the wireless connection between the primary device and the secondary device to the fifth frequency includes: in a case where the frequency of the wireless connection between the primary device and the second access point is to change from the fourth frequency to the fifth frequency, setting the frequency for accessing the primary device to the fifth frequency; notifying the secondary device that the frequency for accessing the primary device is set to the fifth frequency; and switching the operating frequencies of the primary device and the secondary device jointly to the fifth frequency.

An embodiment of the present disclosure provides a wireless communication method for a device group including a primary device and a secondary device, where the primary device is connectable to the secondary device and other access points in a same frequency channel, the method including: establishing a wireless connection having a sixth frequency between the primary device and a third access point; establishing a wireless connection having the sixth frequency between the primary device and the secondary device; in a case where the wireless connection between the primary device and the third access point is disconnected, determining whether the sixth frequency corresponds to a dynamic frequency selection channel; if it is determined that the sixth frequency corresponds to the dynamic frequency selection channel, starting a channel availability check to detect whether the primary device receives a radar signal having the sixth frequency; and if it is detected that the primary device receives the radar signal having the sixth frequency, switching operating frequencies of the primary device and the secondary device to a seventh frequency to change the frequency of the wireless connection between the primary device and the secondary device to the seventh frequency, where the seventh frequency corresponds to a non-dynamic frequency selection channel.

An embodiment of the present disclosure provides a wireless communication apparatus for a device group including a primary device and a secondary device, where the primary device is connectable to the secondary device and other access points in a same frequency channel, the apparatus including one or more modules for implementing the wireless communication method for a device group as described above.

An embodiment of the present disclosure provides a wireless communication device for a device group, including: one or more processors; and one or more memories having a computer-executable program stored therein, where the computer-executable program, when executed by the processors, implements a wireless communication method for a device group according to an embodiment of the present disclosure.

An embodiment of the present disclosure provides a computer-readable storage medium having computer-executable instructions stored thereon, where the instructions, when executed by a processor, are configured to implement the wireless communication method for a device group as described above.

An embodiment of the present disclosure provides a computer program product or a computer program. The computer program product or the computer program includes computer instructions stored in a computer-readable storage medium. A processor of a computer device reads the computer instructions from the computer-readable storage medium, and the processor executes the computer instructions to cause the computer device to execute the wireless communication method for a device group according to embodiments of the present disclosure.

The method provided in embodiments of the present disclosure, targeting a device group containing a primary device and one or more secondary devices, when a frequency of a network connection of the primary device changes, adjusts operating frequencies of the secondary device and the primary device jointly to a same frequency, where the same frequency is a changed frequency of the network connection of the primary device, or another frequency, such that a frequency of a wireless connection between the primary device and the secondary device is enabled to be changed to a first frequency accordingly, thereby maintaining the wireless connection between the secondary device and the primary device without requiring disconnection and reestablishment of the wireless connection between the secondary device and the primary device in response to channel switching of the primary device. Through the method of embodiments of the present disclosure, a wireless communication channel between the secondary device and the primary device is enabled to be adjusted according to channel variations of the primary device, such that the wireless communication channel between the secondary device and the primary device is enabled to automatically switch following channel variations of the primary device, avoiding disconnection and reconnection performed between the secondary device and the primary device for switching a communication frequency when a wireless connection task of the primary device performs frequency hopping, thereby achieving optimization of wireless communication performance of the device group.

### Brief Description of the Drawings

In order to more clearly illustrate the technical solutions of the embodiments of the present disclosure, the drawings required for describing the embodiments are briefly introduced below. Apparently, the accompanying drawings described below are merely some exemplary embodiments of the present disclosure, and other accompanying drawings can further be obtained according to these accompanying drawings by those of ordinary skill in the art without creative labor.
FIG. 1 is a schematic diagram illustrating wireless communication between a primary device in a device group and a secondary device and other access points according to an embodiment of the present disclosure;
FIG. 2 is a flowchart illustrating a wireless communication method for a device group according to an embodiment of the present disclosure;
FIG. 3 is a flowchart illustrating a wireless communication method for a device group according to an embodiment of the present disclosure;
FIG. 4 is a schematic diagram illustrating a wireless communication method for a device group in a first wireless communication scenario according to an embodiment of the present disclosure;
FIG. 5 is a flowchart illustrating a wireless communication method for a device group according to an embodiment of the present disclosure;
FIG. 6 is a schematic diagram illustrating a wireless communication method for a device group in a second wireless communication scenario according to an embodiment of the present disclosure;
FIG. 7 is a flowchart illustrating a wireless communication method for a device group according to an embodiment of the present disclosure;
FIG. 8 is a schematic diagram illustrating a wireless communication method for a device group in a third wireless communication scenario according to an embodiment of the present disclosure;
FIG. 9 illustrates a schematic diagram of a wireless communication device for a device group according to an embodiment of the present disclosure; and
FIG. 10 illustrates a schematic diagram of an architecture of an exemplary computing device according to an embodiment of the present disclosure.

### Detailed Description

In order to make the objectives, technical solutions, and advantages of the present disclosure more obvious, exemplary embodiments according to the present disclosure will be described in detail below with reference to the drawings. Apparently, the described embodiments are merely some of the embodiments of the present disclosure, rather than all the embodiments of the present disclosure. It should be understood that the present disclosure is not limited by the exemplary embodiments described herein.

In this specification and the drawings, substantially the same or similar steps and elements are denoted by the same or similar reference numerals, and duplicated description of these steps and elements will be omitted. Meanwhile, in the description of the present disclosure, terms "first", "second", and the like are used only for distinguishing description and cannot be understood as indicating or implying relative importance or ordering.

In the embodiments of the present disclosure, the term "module" or "unit" refers to a computer program or a segment of a computer program that has a predetermined function and works together with other related parts to achieve a predetermined goal, and can be implemented entirely or in part by using software, hardware (such as a processing circuit or memory), or a combination thereof. Likewise, one processor (or a plurality of processors or memories) can be used for implementing one or more modules or units. Further, each module or unit may be a part of an integral module or unit that includes the function of the module or unit.

Unless otherwise defined, all technical and scientific terms used herein have the same meanings as commonly understood by those skilled in the technical field to which the present disclosure belongs. The terms used herein are for the purpose of describing embodiments of the present invention only and are not intended to limit the present invention.

With rapid development of wireless communication technologies, single channel concurrency (SCC) and multi-channel concurrency (MCC) are widely applied in various applications to support multi-task processing in wireless communications. MCC technology allows a device to operate multiple tasks on multiple different frequency bands, which enables the device to simultaneously operate on the multiple frequency bands for parallel task processing, provides more flexibility, and improves overall system efficiency; however, this technology takes significant time for frequency switching and introduces high delays, thus impacting user experience. On the other hand, SCC technology allows a device to simultaneously execute multiple tasks on a same frequency channel, thereby improving channel utilization efficiency and reducing costs. However, in a case where one task requires frequency hopping, this technology requires the device to disconnect current connections with other devices and reestablish connections, which obviously affects continuity and stability of communication.

For a plurality of devices operating as a device group, there may exist one primary device and one or more secondary devices in the device group. The primary device undertakes a responsibility for connecting to a network, while the secondary devices interact with the primary device through a plurality of connection methods. Under such a architecture, how to effectively manage and schedule communication tasks of a plurality of devices becomes crucial for enhancing the overall performance. Particularly in scenarios requiring simultaneous processing of multiple tasks, ensuring that each device can operate under optimal conditions becomes particularly important.

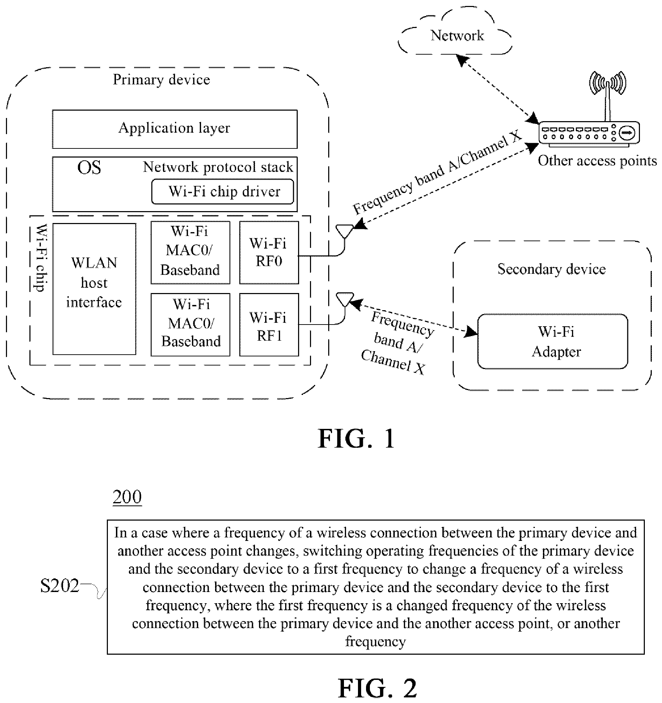

FIG. 1 is a schematic diagram illustrating wireless communication between a primary device in a device group and a secondary device and other access points according to an embodiment of the present disclosure.

For a primary device in a device group, it can simultaneously execute multiple wireless connection tasks on a same frequency channel to improve channel utilization efficiency and reduce communication costs. For example, the primary device may be connected to a network (the connection type thereof includes but not limited to Wi-Fi, for example), and may also be connected to other secondary devices, the connection type of which may include but not limited to P2P (Peer-to-Peer)/SoftAP (Software Access Point)/UWB (Ultra-Wideband) connections, for example.

As shown in FIG. 1, the primary device may be wirelessly connected to other access points (e.g., adapters) in band A and channel X using a Wi-Fi chip (e.g., illustrated as using Wi-Fi RF0 chip in FIG. 1), and connected to the network through the other access points, while other secondary devices may also be connected to the primary device using the Wi-Fi chip of the primary device (e.g., illustrated as using Wi-Fi RF1 chip in FIG. 1) in the same band A and channel X through their own adapters (e.g., Wi-Fi adapters), where the Wi-Fi chip of the primary device described above may be driven by a Wi-Fi chip driver component in an operating system (OS) of the primary device.

To implement high-performance multi-task processing in the device group, the present disclosure proposes a solution based on SCC technology. In particular, the present disclosure proposes a wireless communication method for a device group, which, targeting a device group containing a primary device and one or more secondary devices, when a frequency of a network connection of the primary device changes, adjusts operating frequencies of the secondary device and the primary device jointly to a same frequency, where the same frequency is a changed frequency of the network connection of the primary device, or another frequency, such that a frequency of a wireless connection between the primary device and the secondary device is enabled to be changed to a first frequency accordingly, thereby maintaining the wireless connection between the secondary device and the primary device without requiring disconnection and reestablishment of the wireless connection between the secondary device and the primary device in response to channel switching of the primary device.

Through the wireless communication method of the present disclosure, a wireless communication channel between the secondary device and the primary device is enabled to be adjusted according to channel variations of the primary device, such that the wireless communication channel between the secondary device and the primary device is enabled to automatically switch following channel variations of the primary device, avoiding disconnection and reconnection performed between the secondary device and the primary device for switching a communication frequency when a wireless connection task of the primary device performs frequency hopping, thereby achieving optimization of wireless communication performance of the device group.

FIG. 2 is a flowchart illustrating a wireless communication method 200 for a device group according to an embodiment of the present disclosure.

According to an embodiment of the present disclosure, the device group of the present disclosure may include a primary device and a secondary device, where the primary device is connectable to the secondary device and other access points in a same frequency channel. As described above, the wireless communication method for a device group of the present disclosure may be based on SCC technology, that is, allowing a device to simultaneously execute multiple tasks on a same frequency channel to improve channel utilization efficiency and reduce costs. For example, the primary device in the device group of the present disclosure can simultaneously execute multiple wireless connection tasks on a same frequency channel to simultaneously connect to other access points and the secondary device in the device group.

In step S202, in a case where a frequency of a wireless connection between the primary device and another access point changes, operating frequencies of the primary device and the secondary device may be switched to a first frequency to change a frequency of a wireless connection between the primary device and the secondary device to the first frequency, where the first frequency may be a changed frequency of the wireless connection between the primary device and the another access point, or another frequency.

As described above, in a case where one task of the primary device requires frequency hopping, the SCC technology requires the primary device to disconnect current connections with other devices and reestablish connections with these devices, resulting in continuity and stability of communication being affected non-negligibly.

Therefore, in an embodiment of the present disclosure, in a case where one task of the primary device requires frequency hopping, operating frequencies of the primary device and the secondary device may be switched jointly to cause the secondary device in the device group to follow a channel of the primary device.

Specifically, the wireless communication method of the present disclosure will be described in detail below for a plurality of different wireless communication scenarios of the device group.

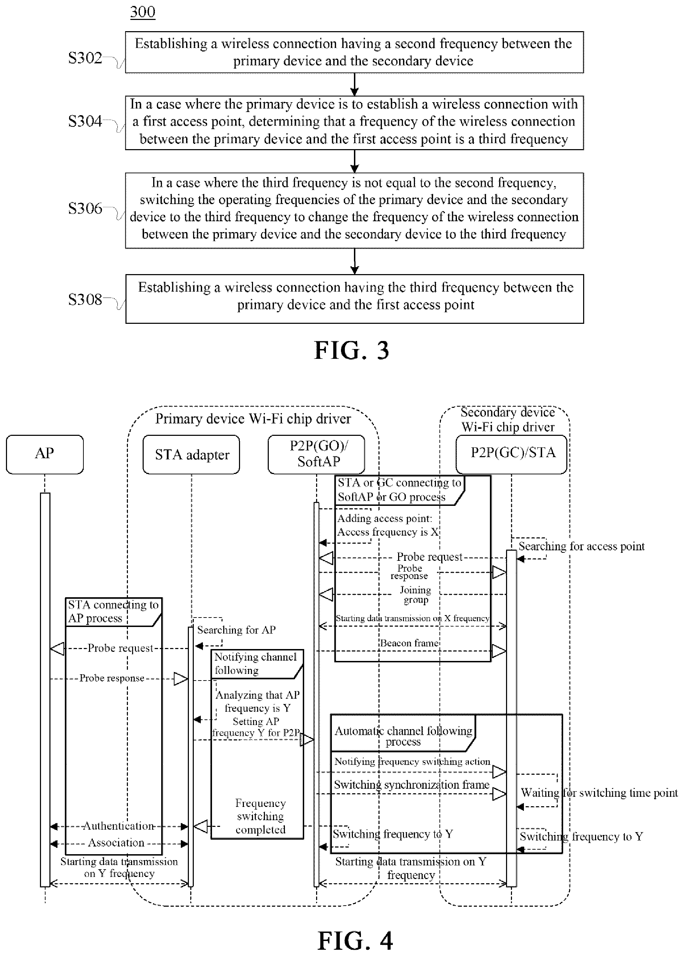

FIG. 3 is a flowchart illustrating a wireless communication method 300 for a device group according to an embodiment of the present disclosure. FIG. 4 is a schematic diagram illustrating a wireless communication method for a device group in a first wireless communication scenario according to an embodiment of the present disclosure.

As shown in FIG. 4, the first wireless communication scenario of the present disclosure may correspond to a communication scenario in which a secondary device is first connected to a primary device via frequency X, and the primary device is subsequently connected to an access point (AP) via frequency Y. Here, as described above, the primary device may be controlled by its Wi-Fi chip driver to connect to the AP using a Station (STA) adapter. This connection method enables the primary device to access the internet or obtain other network resources. Simultaneously, the primary device may also establish a connection with the secondary device by means of a P2P mode, where the primary device may function as a group owner (GO) of a P2P group, or communicate with the secondary device in the form of a SoftAP. Similarly, the secondary device may be controlled by its Wi-Fi chip driver to perform wireless communication through its Wi-Fi chip. For example, it may correspondingly adopt the P2P group client mode (GC) or adopt the STA mode to connect to the primary device. This configuration allows the secondary device to receive data and instructions from the primary device, forming a complete communication link. Note that, in the present disclosure, a Wi-Fi connection is used as an example to describe wireless communication of the device group, but this is not intended as a limitation on the wireless communication method of the present disclosure, and the wireless communication method of the present disclosure may similarly adopt other communication technologies, including but not limited to Zigbee, for example.

In step S302, a wireless connection having a second frequency may be established between the primary device and the secondary device.

First, as shown in "STA or GC connecting to SoftAP or GO process" in FIG. 4, through this connection process, a wireless connection having the second frequency (i.e., frequency X in FIG. 4) may be established between the primary device and the secondary device.

Specifically, according to an embodiment of the present disclosure, establishing a wireless connection having a second frequency between the primary device and the secondary device may include: setting a frequency for accessing the primary device to the second frequency; connecting to the primary device by the secondary device through a frequency channel corresponding to the second frequency, where the second frequency may be the operating frequency of the primary device.

As shown in FIG. 4, a P2P(GO)/SoftAP connection of the primary device may add an access point, an access frequency of which is X, that is, setting the frequency for accessing the primary device to frequency X to allow the secondary device to communicate at this frequency. Optionally, the access frequency X may be the same as the operating frequency of the primary device. Based on this setting, a P2P(GC)/STA connection of the secondary device may determine the primary device by scanning and searching for an access point. After sending a probe request, the secondary device may acquire a probe response from the primary device, and if the probe request is acknowledged, the secondary device may successfully join group communication. Therefore, the primary device and the secondary device may establish a stable wireless connection on frequency X and begin data transmission.

To maintain and optimize the quality of the connection, the primary device may periodically send beacon frames to the secondary device. These beacon frames may not only contain network status information but also convey connection parameters, time synchronization, and other control information, such that the secondary device may adjust its communication strategy according to such information to ensure reliability and efficiency of data transmission.

In step S304, in a case where the primary device is to establish a wireless connection with a first access point, it may be determined that a frequency of the wireless connection between the primary device and the first access point is a third frequency;

Optionally, after the primary device has established a communication connection with the secondary device, the primary device may further be connected to the access point (AP), and its connection frequency may be set based on an operating frequency of this access point.

According to an embodiment of the present disclosure, determining that a frequency of the wireless connection between the primary device and the first access point is a third frequency may include: determining an operating frequency of the first access point by the primary device, and setting the third frequency to the operating frequency of the first access point.

As shown in FIG. 4, the primary device may establish a connection with the AP through a "STA connecting to AP process". Specifically, the primary device may perform a search for the AP while communicating with the secondary device. After finding an available AP, it may send a probe request to this AP and obtain a probe response from the AP upon acknowledgment of the probe request. Optionally, the probe response may notify the primary device of basic information of the AP, including but not limited to operating frequency information, for example. Based on this, the primary device may analyze and determine that the operating frequency of the AP is frequency Y based on the probe response, and thus determine that a frequency of its wireless connection with the AP is this frequency Y.

In step S306, in a case where the third frequency is not equal to the second frequency, the operating frequencies of the primary device and the secondary device may be switched to the third frequency to change the frequency of the wireless connection between the primary device and the secondary device to the third frequency.

Therefore, in a case where a frequency of a wireless connection to be established by the primary device with the AP is different from an original communication frequency between the primary device and the secondary device (for example, frequency Y is not equal to frequency X), in an embodiment of the present disclosure, to ensure continuity of the communication connection between the primary device and the secondary device without disconnection and reconnection during frequency switching of the network connection of the primary device, an STA adapter in the primary device may, through the "notifying channel following" processing as shown in FIG. 4, set the determined operating frequency Y of the AP for the P2P connection of the primary device to perform an "automatic channel following process".

According to an embodiment of the present disclosure, in a case where the third frequency is not equal to the second frequency, switching the operating frequencies of the primary device and the secondary device to the third frequency to change the frequency of the wireless connection between the primary device and the secondary device to the third frequency may include: setting a frequency for accessing the primary device to the third frequency; notifying the secondary device that the frequency for accessing the primary device is set to the third frequency; and switching the operating frequencies of the primary device and the secondary device jointly to the third frequency.

Optionally, in the "automatic channel following process", a frequency switching action may be notified to the secondary device through the P2P connection of the primary device, for example, by using a beacon frame to send a frequency switching synchronization message to the secondary device and periodically sending beacon frames for a synchronized switching frequency.

Optionally, the secondary device may wait for a switching time point of the frequency based on received synchronization information. For example, the GC may wait to receive multiple cycles of beacon frames, and its synchronized switching frequency is specified by the GO. Thus, when a predetermined switching time point arrives, the primary device and the secondary device may synchronously perform frequency switching, for example, synchronously switching their operating frequencies to frequency Y. Based on this synchronous switching, the continuity of the wireless connection between the primary device and the secondary device can still be maintained, and the primary device and the secondary device both switch to operate at frequency Y and continue data transmission at the Y frequency without disconnection and reconnection between the primary device and the secondary device.

In step S308, a wireless connection having the third frequency may be established between the primary device and the first access point.

Optionally, after completion of frequency switching of the primary device and the secondary device, a message notifying completion of frequency switching may be sent to the STA adapter in the primary device to instruct the primary device to complete a wireless connection with the AP through authentication and association.

Based on this, the primary device and the AP may perform data transmission at the Y frequency.

As described above, the first wireless communication scenario of the present disclosure corresponds to a case where a frequency of a wireless connection between the primary device and another access point changes from non-existence to frequency Y (i.e., the primary device establishes a connection with the another access point). That is, in this first wireless communication scenario, the primary device does not establish a connection with the another access point before connecting to the secondary device, and the connection with this another access point (i.e., access point AP) causes frequency switching of the wireless connection between the primary device and the secondary device.

Through the aforementioned wireless communication method, communication delay and interruption caused by frequency switching of the primary device may be effectively reduced in this first wireless communication scenario, thereby improving overall performance and reliability of the system. By achieving seamless frequency switching, the system can better cope with frequency variations and interference in dynamic environments, ensuring stability and continuity of data transmission.

Correspondingly to the first wireless communication scenario described above, scenarios where the primary device has established a connection with another access point before connecting to the secondary device and a frequency of the wireless connection with the another access point changes after connecting to the secondary device will be described below, namely, a second wireless communication scenario and a third wireless communication scenario. Among them, the second wireless communication scenario corresponds to a case where a frequency of a wireless connection between the primary device and the another access point changes from one frequency (e.g., frequency X) to another frequency (e.g., frequency Y) (i.e., the primary device maintains connection with the another access point but switches frequency), while the third wireless communication scenario corresponds to a case where the frequency of the wireless connection between the primary device and the another access point changes from one frequency (e.g., frequency X) to non-existence (i.e., the primary device disconnects from the another access point).

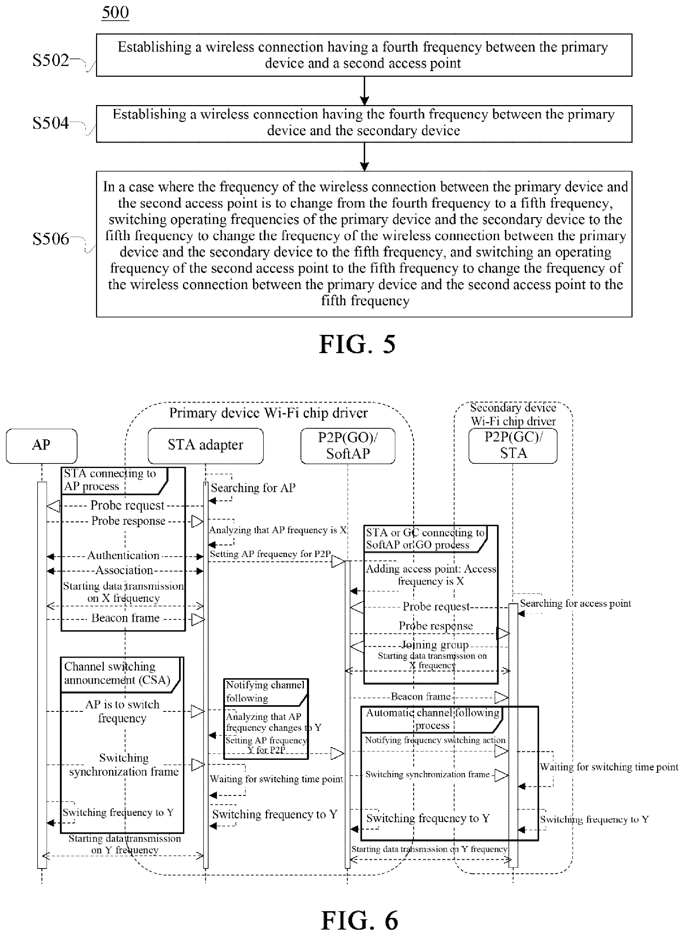

FIG. 5 is a flowchart illustrating a wireless communication method 500 for a device group according to an embodiment of the present disclosure. FIG. 6 is a schematic diagram illustrating a wireless communication method for a device group in a second wireless communication scenario according to an embodiment of the present disclosure.

As shown in FIG. 5, in step S502, a wireless connection having a fourth frequency may be established between the primary device and a second access point.

According to an embodiment of the present disclosure, establishing a wireless connection having a fourth frequency between the primary device and a second access point may include: determining the operating frequency of the second access point by the primary device, and setting the fourth frequency to the operating frequency of the second access point; and connecting to the second access point by the primary device through a frequency channel corresponding to the fourth frequency.

As shown in FIG. 6, the primary device may establish a wireless connection having the fourth frequency (i.e., frequency X in FIG. 6) with the access point AP through a "STA connecting to AP process".

Optionally, similarly to the description referring to step S304 above, the primary device may first perform a search for the AP. After finding an available AP, it may send a probe request to this AP and obtain a probe response from the AP upon acknowledgment of the probe request. Optionally, the probe response may notify the primary device of basic information of the AP, including but not limited to operating frequency information, for example. Based on this, the primary device may analyze and determine that the operating frequency of the AP is frequency Y based on the probe response, and thus determine that a frequency of its wireless connection with the AP (i.e., the fourth frequency) is this frequency Y.

Therefore, after determining the operating frequency of the AP, the primary device and the AP may complete a wireless connection through authentication and association and begin data transmission at this fourth frequency (e.g., frequency X). Optionally, during communication between the primary device and the AP, the AP may periodically send beacon frames to the primary device. These beacon frames may contain network status information but also convey connection parameters, time synchronization, and other control information; therefore, the primary device may adjust its communication strategy according to such information to ensure reliability and efficiency of data transmission.

In step S504, a wireless connection having the fourth frequency may be established between the primary device and the secondary device.

Optionally, to cause other wireless connection tasks of the primary device to be executed on the same frequency channel, the STA adapter in the primary device may set the determined operating frequency of the AP for the P2P connection of the primary device, such that other wireless connections of the primary device operate at the same frequency.

According to an embodiment of the present disclosure, establishing a wireless connection having the fourth frequency between the primary device and the secondary device may include: after determining the operating frequency of the second access point by the primary device, and setting the fourth frequency to the operating frequency of the second access point, setting a frequency for accessing the primary device to the fourth frequency; and connecting to the primary device by the primary device through a frequency channel corresponding to the fourth frequency.

Optionally, as shown in FIG. 6, a P2P(GO)/SoftAP connection of the primary device may add an access point based on its access frequency. That is, its access frequency is the AP frequency to allow the secondary device to communicate at this frequency. Based on this setting, a P2P(GC)/STA connection of the secondary device may determine the primary device by scanning and searching for an access point. After sending a probe request, the secondary device may acquire a probe response from the primary device, and if the probe request is acknowledged, the secondary device may successfully join group communication. Therefore, the primary device and the secondary device may establish a stable wireless connection on this frequency X and begin data transmission.

In step S506, in a case where the frequency of the wireless connection between the primary device and the second access point is to change from the fourth frequency to a fifth frequency, operating frequencies of the primary device and the secondary device may be switched to the fifth frequency to change the frequency of the wireless connection between the primary device and the secondary device to the fifth frequency, and switching an operating frequency of the second access point to the fifth frequency to change the frequency of the wireless connection between the primary device and the second access point to the fifth frequency.

Optionally, in this second wireless communication scenario, after the primary device undergoes wireless communication with the access point (AP) and the secondary device through the same frequency channel (for example, the frequency is X) for a period of time, the AP will switch to another frequency channel. Therefore, in this case, through a channel switching announcement (CSA), the AP may notify the primary device of a frequency switching action it will perform. For example, the AP may use beacon frames to notify the primary device of switching frequency information and a synchronization cycle.

According to an embodiment of the present disclosure, in a case where the frequency of the wireless connection between the primary device and the second access point is to change from the fourth frequency to a fifth frequency, switching operating frequencies of the primary device and the secondary device to the fifth frequency to change the frequency of the wireless connection between the primary device and the secondary device to the fifth frequency may include: in a case where the frequency of the wireless connection between the primary device and the second access point is to change from the fourth frequency to the fifth frequency, setting the frequency for accessing the primary device to the fifth frequency; notifying the secondary device that the frequency for accessing the primary device is set to the fifth frequency; and switching the operating frequencies of the primary device and the secondary device jointly to the fifth frequency.

Optionally, after receiving the switching frequency information, the primary device may analyze and determine that the AP frequency will change to another frequency, and thus may set this another frequency for the P2P connection of the primary device through "notifying channel following" processing as shown in FIG. 6 to perform an "automatic channel following process", enabling a wireless connection between the primary device and the secondary device to continue at an identical another frequency.

Optionally, in the "automatic channel following process", a frequency switching action may be notified to the secondary device through the P2P connection of the primary device, for example, by using a beacon frame to send a frequency switching synchronization message to the secondary device and periodically sending beacon frames for a synchronized switching frequency.

Optionally, the secondary device may wait for a switching time point of the frequency based on received synchronization information. For example, the GC may wait to receive multiple cycles of beacon frames, and its synchronized switching frequency is specified by the GO. Furthermore, after receiving a beacon frame indicating the synchronized switching frequency that is sent by the AP (i.e., "switching synchronization frame" in FIG. 6), the primary device may also wait for a switching time point of the frequency based on a synchronized switching frequency specified by the AP.

Thus, when a predetermined switching time point arrives, as shown in FIG. 6, the AP, the primary device, and the secondary device may synchronously perform frequency switching, for example, synchronously switching their operating frequencies to frequency Y. Based on this synchronous switching, the continuity of respective wireless connections between the AP and the primary device and between the primary device and the secondary device can still be maintained, and the AP, the primary device, and the secondary device all switch to operate at frequency Y and continue data transmission at the Y frequency without disconnection and reconnection between the AP and the primary device as well as between the primary device and the secondary device.

As described above, referring to the second wireless communication scenario, a wireless communication method in a case where a frequency of a wireless connection between the primary device and another access point changes from frequency X to frequency Y is described; by synchronously switching operating frequencies of the AP, the primary device, and the secondary device to the same frequency, continuous communication connections between the AP and the primary device and between the primary device and the secondary device may be maintained, which effectively reduces communication delay and interruption caused by frequency switching of the AP and the primary device, thereby ensuring stability and continuity of data transmission.

A third wireless communication scenario related to a dynamic frequency selection (DFS) channel is illustrated below. Here, similarly to the second wireless communication scenario, the primary device first establishes a connection with another access point, and after the primary device connects to the secondary device, the connection between the primary device and this another access point is disconnected.

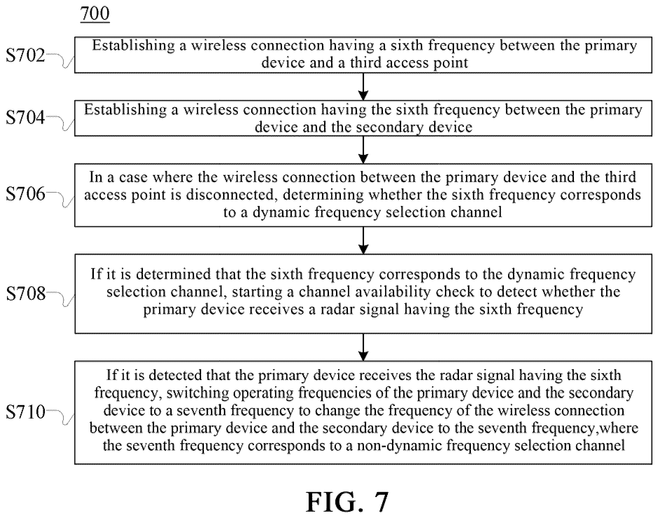

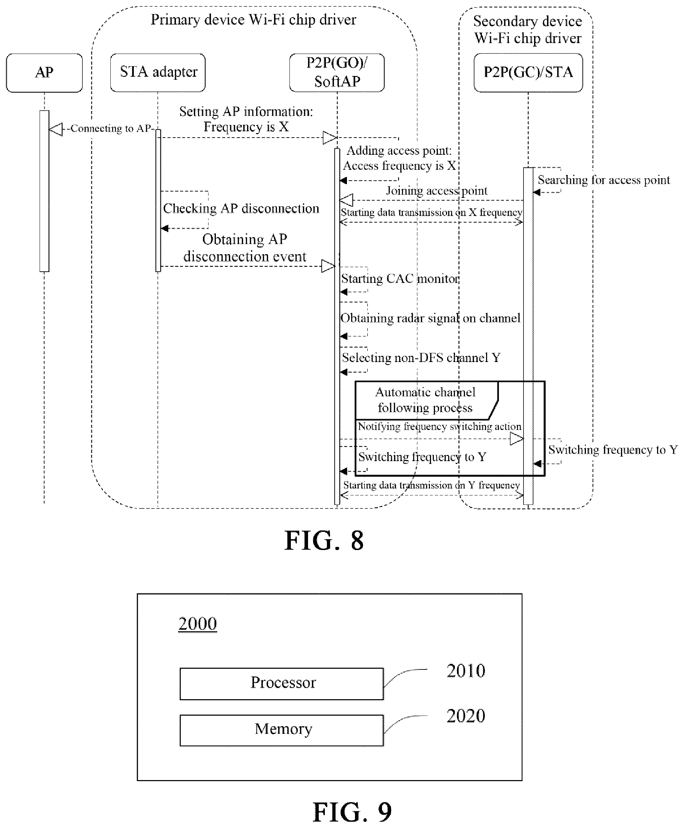

FIG. 7 is a flowchart illustrating a wireless communication method 700 for a device group according to an embodiment of the present disclosure. FIG. 8 is a schematic diagram illustrating a wireless communication method for a device group in a third wireless communication scenario according to an embodiment of the present disclosure.

In step S702, a wireless connection having a sixth frequency may be established between the primary device and a third access point.

Optionally, similarly to the description referring to step S502 above, the primary device may first be connected to the AP. For example, it may first perform a search for the AP, and after finding an available AP, it may send a probe request to this AP and obtain a probe response from the AP upon acknowledgment of the probe request. Optionally, the probe response may notify the primary device of basic information of the AP, including but not limited to operating frequency information, for example. Based on this, the primary device may analyze and determine that the operating frequency of the AP is frequency Y based on the probe response, and thus determine that a frequency of its wireless connection with the AP (i.e., the sixth frequency) is this frequency Y. Therefore, after determining the operating frequency of the AP, the primary device and the AP may complete a wireless connection through authentication and association and begin data transmission at this sixth frequency (e.g., frequency X).

In step S704, a wireless connection having the sixth frequency may be established between the primary device and the secondary device.

Optionally, to cause other wireless connection tasks of the primary device to be executed on the same frequency channel, the STA adapter in the primary device may set the determined operating frequency of the AP for the P2P connection of the primary device, such that other wireless connections of the primary device operate at the same frequency.

Optionally, as shown in FIG. 8, a P2P(GO)/SoftAP connection of the primary device may add an access point based on its access frequency. That is, its access frequency is the AP frequency to allow the secondary device to communicate at this frequency. Based on this setting, a P2P(GC)/STA connection of the secondary device may determine the primary device by scanning and searching for an access point. After sending a probe request, the secondary device may acquire a probe response from the primary device, and if the probe request is acknowledged, the secondary device may successfully join group communication. Therefore, the primary device and the secondary device may establish a stable wireless connection on this frequency X and begin data transmission.

In step S706, in a case where the wireless connection between the primary device and the third access point is disconnected, it may be determined whether the sixth frequency corresponds to a dynamic frequency selection channel.

Optionally, the STA adapter of the primary device may monitor a connection status with the AP, for example, to continuously check whether disconnection from the AP occurs.

Optionally, after the STA adapter of the primary device determines disconnection from the AP through the above check, it may notify a P2P(GO)/SoftAP connection of the primary device that an AP disconnection event is obtained.

Optionally, the primary device may, in response to this AP disconnection event, check whether its current operating frequency (i.e., the sixth frequency) corresponds to a dynamic frequency selection (DFS) channel.

In step S708, if it is determined that the sixth frequency corresponds to the dynamic frequency selection channel, a channel availability check may be started to detect whether the primary device receives a radar signal having the sixth frequency.

Optionally, in a case where the current operating frequency of the primary device and the secondary device correspond to a dynamic frequency selection channel, a channel availability check (CAC) monitor may be started to detect radar signals to determine whether other devices are currently performing communication on the current operating frequency at this time. The CAC monitor may focus on receiving radar signals at frequency X and adjacent frequencies thereof to ensure that no radar signal exists on this channel.

In step S710, if it is detected that the primary device receives the radar signal having the sixth frequency, operating frequencies of the primary device and the secondary device may be switched to a seventh frequency to change the frequency of the wireless connection between the primary device and the secondary device to the seventh frequency, where the seventh frequency corresponds to a non-dynamic frequency selection channel.

Optionally, when the primary device detects a radar signal on this channel, this may indicate that frequency X is being used; therefore, in this case, the primary device and all secondary devices may switch to another available non-DFS channel to protect normal operation of radar systems and avoid causing interference thereto.

Through this mechanism, the primary device may ensure timely response when a network connection is disconnected, so as to maintain stability of a wireless network while complying with regulatory requirements regarding use of DFS channels, enabling checking and use of available DFS channels when the primary device disconnects other network connections. This dynamic switching not only ensures continuity and reliability of network connections but also avoids causing interference to critical radar systems.

As described above, with three different wireless communication scenarios as examples without limitation, the wireless communication method of the present disclosure may be applied to wireless connection frequency checking and tracking of the device group in various scenarios. That is, when a frequency of a network connection of the primary device changes, adjusts operating frequencies of the secondary device and the primary device jointly to a same frequency, where the same frequency is a changed frequency of the network connection of the primary device, or another frequency, such that a frequency of a wireless connection between the primary device and the secondary device is enabled to be changed to a first frequency accordingly, thereby maintaining the wireless connection between the secondary device and the primary device without requiring disconnection and reestablishment of the wireless connection between the secondary device and the primary device in response to channel switching of the primary device.

Through the wireless communication method described above, a wireless communication channel between the secondary device and the primary device is enabled to be adjusted according to channel variations of the primary device, such that the wireless communication channel between the secondary device and the primary device is enabled to automatically switch following channel variations of the primary device, avoiding disconnection and reconnection performed between the secondary device and the primary device for switching a communication frequency when a wireless connection task of the primary device performs frequency hopping, thereby achieving optimization of wireless communication performance of the device group.

According to another aspect of the present disclosure, a wireless communication apparatus for a device group is provided. The wireless communication apparatus may include one or more modules for implementing the wireless communication method described above. Optionally, these modules may perform the operations described above with reference to steps S202, S302-S308, S502-S506, and S702-S710, which will not be described in detail in the present disclosure.

According to a further aspect of the present disclosure, a wireless communication device for a device group is provided. FIG. 9 illustrates a schematic diagram of a wireless communication device 2000 for a device group according to an embodiment of the present disclosure.

As shown in FIG. 9, the wireless communication device 2000 for a device group may include one or more processors 2010, and one or more memories 2020. Here, the memories 2020 store computer-readable code, where the computer-readable code, when executed by the one or more processors 2010, can execute the wireless communication method for a device group as described above.

The processor in the embodiments of the present disclosure may be an integrated circuit chip having signal processing capability. The aforementioned processor may be a general-purpose processor, a digital signal processor (DSP), an application-specific integrated circuit (ASIC), a field-programmable gate array (FPGA), or other programmable logic devices, discrete gates or transistor logic device, or discrete hardware components. It may implement or execute the methods, steps, and logic block diagrams disclosed in the embodiments of the present application. The general-purpose processor may be a microprocessor or the processor may also be any conventional processor, or the like, which may be based on an X86 architecture or an ARM architecture.

Generally speaking, various exemplary embodiments of the present disclosure may be implemented in hardware or a dedicated circuit, software, firmware, logic, or any combination thereof. Some aspects may be implemented in hardware, while other aspects may be implemented in firmware or software which may be executed by a controller, microprocessor or other computing device. When aspects of embodiments of the present disclosure are illustrated or described as a block diagram, a flowchart, or using some other graphical representation, it will be understood that the blocks, apparatuses, systems, techniques, or methods described herein may be implemented as non-limiting examples in hardware, software, firmware, a special purpose circuit or logic, general purpose hardware or controller or other computing device, or some combination thereof.

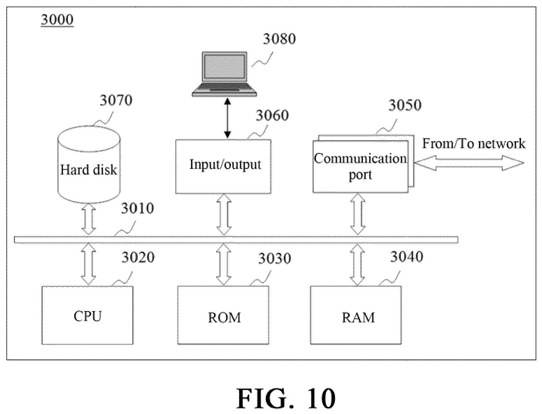

For example, the methods or apparatuses according to embodiments of the present disclosure may also be implemented with the aid of the architecture of the computing device 3000 shown in FIG. 10. As shown in FIG. 10, the computing device 3000 may include a bus 3010, one or more CPUs 3020, a read-only memory (ROM) 3030, a random access memory (RAM) 3040, a communication port 3050 connected to a network, an input/output component 3060, a hard disk 3070, and the like. A storage device in the computing device 3000, for example, a ROM 3030 or a hard disk 3070, may store various data or files used in the processing and/or communication of the wireless communication method for a device group provided in the present disclosure, as well as program instructions executed by the CPU. The computing device 3000 may also include a user interface 3080. Of course, the architecture shown in FIG. 10 is merely exemplary, and when implementing different devices, one or more components in the computing device shown in FIG. 10 may be omitted according to actual needs.

According to yet another aspect of the present disclosure, a computer-readable storage medium is further provided. The computer storage medium has computer-readable instructions stored thereon. When the computer-readable instructions are executed by the processor, the wireless communication method for a device group according to the embodiments of the present disclosure described with reference to the above figures may be executed. The computer-readable storage medium in the embodiments of the present disclosure may be a volatile memory or a nonvolatile memory, or may include both a volatile and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. By way of example and not limitation, many forms of RAM are available, such as static random access memory (SRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronous linked dynamic random access memory (SLDRAM), and direct memory bus random access memory (DR RAM). It should be noted that memory of the methods described herein is intended to include, but is not limited to, these and any other suitable types of memory. It should be noted that memory of the methods described herein is intended to include, but is not limited to, these and any other suitable types of memory.

An embodiment of the present disclosure further provides a computer program product or a computer program. The computer program product or the computer program includes computer instructions stored in a computer-readable storage medium. A processor of a computer device reads the computer instructions from the computer-readable storage medium, and the processor executes the computer instructions to cause the computer device to execute the wireless communication method for a device group according to embodiments of the present disclosure.

Embodiments of the present disclosure provide a wireless communication method, apparatus, and device for a device group, a computer program product, and a computer-readable storage medium.

The method provided in embodiments of the present disclosure, targeting a device group containing a primary device and one or more secondary devices, when a frequency of a network connection of the primary device changes, adjusts operating frequencies of the secondary device and the primary device jointly to a same frequency, where the same frequency is a changed frequency of the network connection of the primary device, or another frequency, such that a frequency of a wireless connection between the primary device and the secondary device is enabled to be changed to a first frequency accordingly, thereby maintaining the wireless connection between the secondary device and the primary device without requiring disconnection and reestablishment of the wireless connection between the secondary device and the primary device in response to channel switching of the primary device. Through the method of embodiments of the present disclosure, a wireless communication channel between the secondary device and the primary device is enabled to be adjusted according to channel variations of the primary device, such that the wireless communication channel between the secondary device and the primary device is enabled to automatically switch following channel variations of the primary device, avoiding disconnection and reconnection performed between the secondary device and the primary device for switching a communication frequency when a wireless connection task of the primary device performs frequency hopping, thereby achieving optimization of wireless communication performance of the device group.

It should be noted that the flowcharts and block diagrams in the drawings illustrate possible architectures, functions, and operations of systems, methods, and computer program products according to various embodiments of the present disclosure. In this regard, each block in the flowcharts or block diagrams may represent a module, a program segment, or a portion of code, which contains at least one executable instruction for implementing the specified logical function. It should also be noted that, in some alternative implementations, the functions noted in the blocks may occur in an order other than that noted in the drawings. For example, two blocks shown in succession may actually be executed substantially in parallel, or they may sometimes be executed in the reverse order, depending on the functionality involved. It should be further noted that, each block in the block diagrams and/or flow charts and a combination of blocks in the block diagrams and/or flow charts may be implemented by using a dedicated hardware-based system used for executing specified functions or operations, or may be implemented by using a combination of dedicated hardware and a computer instruction.

Generally speaking, various exemplary embodiments of the present disclosure may be implemented in hardware or a dedicated circuit, software, firmware, logic, or any combination thereof. Some aspects may be implemented in hardware, while other aspects may be implemented in firmware or software which may be executed by a controller, microprocessor or other computing device. When aspects of embodiments of the present disclosure are illustrated or described as a block diagram, a flowchart, or using some other graphical representation, it will be understood that the blocks, apparatuses, systems, techniques, or methods described herein may be implemented as non-limiting examples in hardware, software, firmware, a special purpose circuit or logic, general purpose hardware or controller or other computing device, or some combination thereof.

The example embodiments of the present disclosure described in detail above are illustrative only and not restrictive. Those skilled in the art should understand that various modifications and combinations may be made to these embodiments or features thereof without departing from the principles and spirit of the present disclosure, and such modifications should fall within the scope of the present disclosure.

## Claims

1. A wireless communication method for a device group comprising a primary device and a secondary device, wherein the primary device is connectable to the secondary device and other access points in a same frequency channel, the method comprising:
in a case where a frequency of a wireless connection between the primary device and another access point changes, switching operating frequencies of the primary device and the secondary device to a first frequency to change a frequency of a wireless connection between the primary device and the secondary device to the first frequency, wherein the first frequency is a changed frequency of the wireless connection between the primary device and the another access point, or another frequency.

2. A wireless communication method for a device group comprising a primary device and a secondary device, wherein the primary device is connectable to the secondary device and other access points in a same frequency channel, the method comprising:
establishing a wireless connection having a second frequency between the primary device and the secondary device;
in a case where the primary device is to establish a wireless connection with a first access point, determining that a frequency of the wireless connection between the primary device and the first access point is a third frequency;
in a case where the third frequency is not equal to the second frequency, switching the operating frequencies of the primary device and the secondary device to the third frequency to change the frequency of the wireless connection between the primary device and the secondary device to the third frequency; and
establishing a wireless connection having the third frequency between the primary device and the first access point.

3. The wireless communication method of claim 2, wherein establishing a wireless connection having a second frequency between the primary device and the secondary device comprises:
setting a frequency for accessing the primary device to the second frequency;
connecting to the primary device by the secondary device through a frequency channel corresponding to the second frequency,
wherein the second frequency is the operating frequency of the primary device.

4. The wireless communication method of claim 2 or 3, wherein determining that a frequency of the wireless connection between the primary device and the first access point is a third frequency comprises:
determining an operating frequency of the first access point by the primary device, and setting the third frequency to the operating frequency of the first access point.

5. The wireless communication method of any of claims 2 to 4, wherein in a case where the third frequency is not equal to the second frequency, switching the operating frequencies of the primary device and the secondary device to the third frequency to change the frequency of the wireless connection between the primary device and the secondary device to the third frequency comprises:
setting a frequency for accessing the primary device to the third frequency;
notifying the secondary device that the frequency for accessing the primary device is set to the third frequency; and
switching the operating frequencies of the primary device and the secondary device jointly to the third frequency.

6. A wireless communication method for a device group comprising a primary device and a secondary device, wherein the primary device is connectable to the secondary device and other access points in a same frequency channel, the method comprising:
establishing a wireless connection having a fourth frequency between the primary device and a second access point;
establishing a wireless connection having the fourth frequency between the primary device and the secondary device; and
in a case where the frequency of the wireless connection between the primary device and the second access point is to change from the fourth frequency to a fifth frequency, switching operating frequencies of the primary device and the secondary device to the fifth frequency to change the frequency of the wireless connection between the primary device and the secondary device to the fifth frequency, and switching an operating frequency of the second access point to the fifth frequency to change the frequency of the wireless connection between the primary device and the second access point to the fifth frequency.

7. The wireless communication method of claim 6, wherein establishing a wireless connection having a fourth frequency between the primary device and a second access point comprises:
determining the operating frequency of the second access point by the primary device, and setting the fourth frequency to the operating frequency of the second access point; and
connecting to the second access point by the primary device through a frequency channel corresponding to the fourth frequency.

8. The wireless communication method of claim 7, wherein establishing a wireless connection having the fourth frequency between the primary device and the secondary device comprises:
after determining the operating frequency of the second access point by the primary device, and setting the fourth frequency to the operating frequency of the second access point, setting a frequency for accessing the primary device to the fourth frequency; and
connecting to the primary device by the secondary device through a frequency channel corresponding to the fourth frequency.

9. The wireless communication method of claim 8, wherein in a case where the frequency of the wireless connection between the primary device and the second access point is to change from the fourth frequency to a fifth frequency, switching operating frequencies of the primary device and the secondary device to the fifth frequency to change the frequency of the wireless connection between the primary device and the secondary device to the fifth frequency comprises:
in a case where the frequency of the wireless connection between the primary device and the second access point is to change from the fourth frequency to the fifth frequency, setting the frequency for accessing the primary device to the fifth frequency;
notifying the secondary device that the frequency for accessing the primary device is set to the fifth frequency; and
switching the operating frequencies of the primary device and the secondary device jointly to the fifth frequency.

10. A wireless communication method for a device group comprising a primary device and a secondary device, wherein the primary device is connectable to the secondary device and other access points in a same frequency channel, the method comprising:
establishing a wireless connection having a sixth frequency between the primary device and a third access point;
establishing a wireless connection having the sixth frequency between the primary device and the secondary device;
in a case where the wireless connection between the primary device and the third access point is disconnected, determining whether the sixth frequency corresponds to a dynamic frequency selection channel;
if it is determined that the sixth frequency corresponds to the dynamic frequency selection channel, starting a channel availability check to detect whether the primary device receives a radar signal having the sixth frequency; and
if it is detected that the primary device receives the radar signal having the sixth frequency, switching operating frequencies of the primary device and the secondary device to a seventh frequency to change the frequency of the wireless connection between the primary device and the secondary device to the seventh frequency, wherein the seventh frequency corresponds to a non-dynamic frequency selection channel.

11. A wireless communication apparatus for a device group comprising a primary device and a secondary device, wherein the primary device is connectable to the secondary device and other access points in a same frequency channel, the apparatus comprising one or more modules for implementing the method of any one of claims 1-10.

12. A wireless communication device for a device group, comprising:
one or more processors; and
one or more memories having a computer-executable program stored therein, wherein the computer-executable program, when executed by the processors, implements the method of any one of claims 1-10.

13. A computer program product, the computer program product being stored on a computer-readable storage medium and comprising computer instructions, wherein the computer instructions, when run by a processor, cause a computer device to execute the method of any one of claims 1-10.

14. A computer-readable storage medium having computer-executable instructions stored thereon, wherein the instructions, when executed by a processor, cause the method of any one of claims 1-10 to be implemented.
